# EUROPEAN PATENT SPECIFICATION

(11) **EP 1 010 259 B1**
(45) Date of publication and mention of the grant of the patent: **26.02.2003**
(21) Application number: 98945165.3
(22) Date of filing: 27.07.1998
(51) Int. Cl.: H04B 7/005

(54) **SYSTEM FOR AND METHOD OF MEASURING POWER**
SYSTEM UND VERFAHREN ZUR LEISTUNGSMESSUNG
SYSTEME ET PROCEDE POUR MESURER LA PUISSANCE

(30) Priority: 29.08.1997 GB 9718188
(43) Date of publication of application: 21.06.2000
(73) Proprietor: MOTOROLA LTD, Basingstoke, Hampshire RG22 4PD (GB)
(72) Inventor: MOHEBBI, Behzad, Cambridge Park, Twickenham TW1 2NJ (GB)
(74) Representative: Litchfield, Laura Marie
(86) International application number: EP9804987
(87) International publication number: WO99012277

(56) References cited:
- EP-A- 0 528 639
- EP-A- 0 718 985
- US-A- 5 583 870
- US-A- 5 648 955
- PATENT ABSTRACTS OF JAPAN vol. 097, no. 007, 31 July 1997 & JP 09 084104 A (FUJITSU LTD), 28 March 1997
- SILVENTOINEN M I ET AL: "FAST POWER CONTROL FOR GSM HBS USING TRAINING SEQUENCES" 1997 IEEE 47TH. VEHICULAR TECHNOLOGY CONFERENCE, PHOENIX, MAY 4 - 7, 1997, vol. 3, no. CONF. 47, 4 May 1997, pages 1689-1693, XP000738651 INSTITUTE OF ELECTRICAL AND ELECTRONICS ENGINEERS
- MOULY M, PAUTET M.-B.: "The GSM System for mobile communications", 1992, CELL&SYS, PARIS

## Description

### Field of the Invention

The present invention relates to a method of and system for measuring power in a picocell or microcell of a time division communications system, for example, a Time Division Multiple Access (TDMA) system, such a Global System for Mobile communications (GSM) cellular network.

### Background of the Invention

In a picocell of a GSM system, it is necessary to measure power of Radio Frequency (RF) transmissions between at least one base station and a mobile terminal for the purpose of determining a best service cell having the least propagation path loss. However, it is not possible to make such a measurement in accordance with the European Telecommunications Standards Institute (ETSI) specification for GSM (ETSI GSM 05.08) if common Broadcast Control Channel (BCCH) data is transmitted by all of the base stations.

A description of the GSM cellular communication system as standardised Is given In M.Mouly, M.B.Pautet, The GSM System for Mobile Communications', ISBN: 2-9507190-0-7, Cell&Sys, Paris, 1992.

As a way of achieving the above object in a picocell, it is known to provide an additional receiver at each base station in a geographic area to be covered by the picocell. Such a solution permits the power of uplink transmissions from the mobile terminal within a coverage area of each of the base stations provided with the additional receiver to be measured. However, the provision of additional receivers at the base stations is costly, increases the power consumption of each base station, and increases the physical dimensions of each base station.

### Summary of the Invention

According to a first aspect of the present invention, there is provided a communications system as claimed in claim 1.

According to a second aspect of the present invention, there is provided a method of measuring power in a system as claimed in claim 6.

It is thus possible to provide a low cost apparatus for and method of measuring power within a picocell or microcell which has both reduced power consumption and reduced physical dimensions. Additionally, speech quality is not degraded and data throughput of a communications system, into which the picocell or microcell is integrated, is not reduced.

Other, preferred, features and advantages are set forth in, and will become apparent from, the following description and appended dependent claims.

### Brief Description of the Drawings

At least one embodiment of the invention will now be described, by way of example, with reference to the accompanying drawings, in which:
FIG. 1 is a schematic diagram of a system constituting an embodiment of the present invention;
FIG. 2 is a schematic diagram of a receiver chain for use in the system of FIG. 1;
FIG. 3 is a schematic diagram of a first data frame structure for the system of FIG. 1;
FIG. 4 is a schematic diagram of a second data frame structure for the system of FIG. 1; and
FIG. 5 is a flow diagram of a method of measuring uplink power transmitted by a mobile terminal in accordance with an embodiment of the invention..

### Description of an Embodiment of the Invention

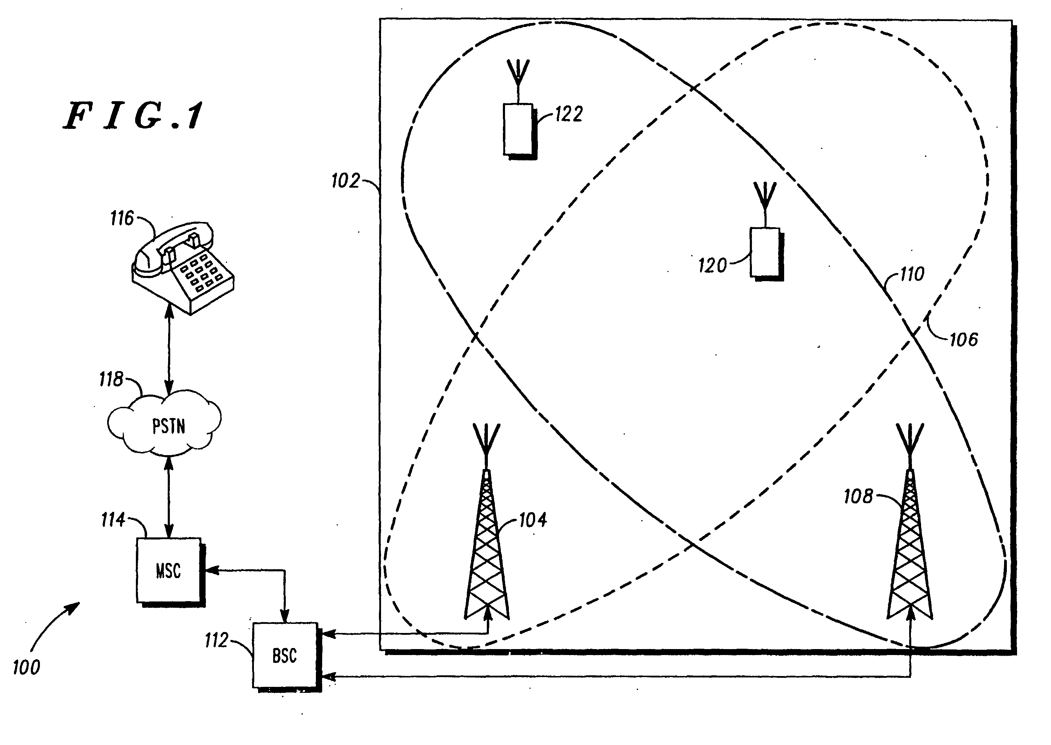

A picocell system 100 (FIG. 1) installed in a geographic area, for example, a room 102 comprises a first base station 104 having a first associated coverage area 106 and a second base station 108 having a second associated coverage area 110.

Both the first and second base stations 104, 108 are independently coupled to a Base Station Controller (BSC) 112, the BSC 112 being coupled to a Mobile Switching Centre (MSC) 114. The MSC 114 can be in communication with a fixed terminal 116, such as a land-line telephone, via a Public Switched Telecommunications Network (PSTN) 118.

An example of the first and second base stations 104,108 is a pair of M-CELL® base stations manufactured by a Motorola Limited. The M-CELL base stations have appropriate hardware and/or software modifications so as to be capable of functioning with a single common Broadcast Control Channel (BCCH). The M-CELL base stations are adapted to function using a single carrier signal supporting eight time slots. However, it is not essential to use a single carrier signal, and other systems can be employed.

A first mobile terminal 120 is located within the first coverage area 106 and the second coverage area 110. However, it is not essential for the first mobile terminal 120 to be located within the second coverage area 110. The first mobile terminal 120 can be located in the vicinity of the second coverage area 110. A second mobile terminal 122 is located within the second coverage area 110.

An example of the first and second mobile terminals 120,122 is a StarTac® GSM cellular telephone manufactured by Motorola GmbH.

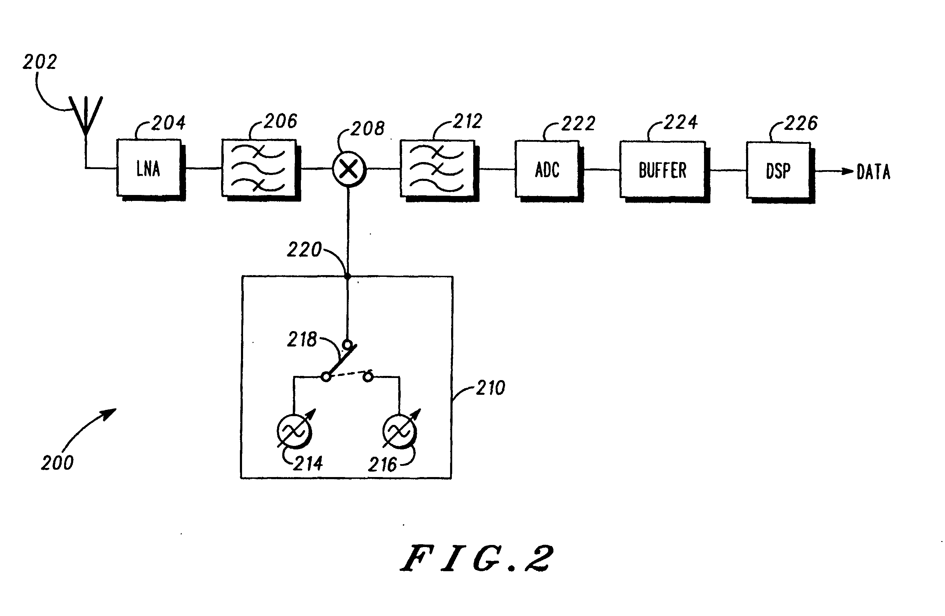

Referring to FIG.2, each of the first and second base stations 104, 108 includes, inter alia, a receiver chain 200. The receiver chain 200 has an antenna 202 coupled to a low noise amplifier 204, the low noise amplifier 204 being coupled to a band pass filter 206. The band pass filter 206 is coupled to a mixer 208, the mixer 208 being coupled to a low pass filter 212 and a switched synthesiser unit (SSU) 210. The SSU 210 comprises a first synthesiser 214 and a second synthesiser 216 connected to an output terminal 220 via a switch 218. The SSU 210 is capable of switching between the generation of a first sinusoidal wave having a first frequency and a second sinusoidal wave having a second frequency.

The low pass filter 212 is coupled to an analogue to digital converter (ADC) 222 which is coupled to a Digital Signal Processor (DSP) 226 via a buffer 224.

The above described receiver chain 200 is shown for exemplary purposes only and can also be integrated into a transceiver circuit (not shown).

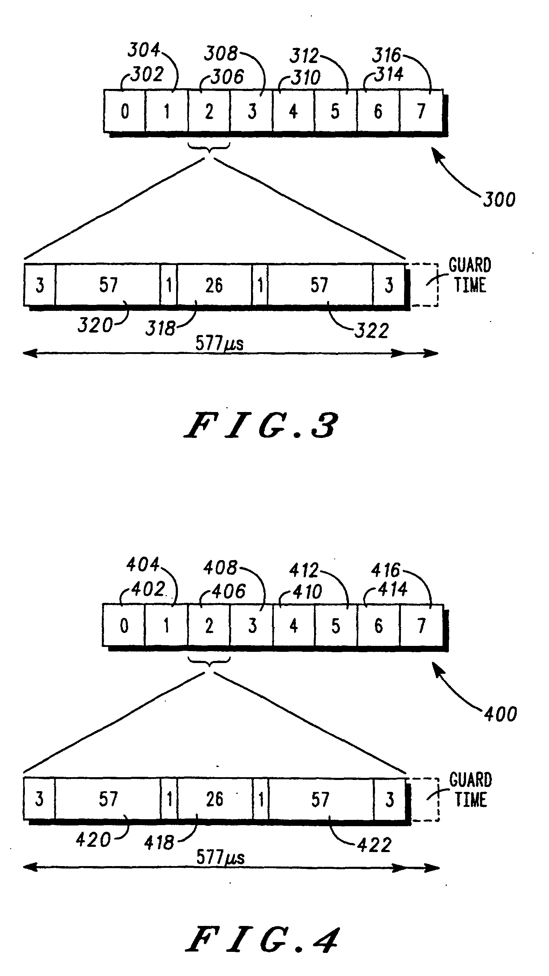

The first base station 104 is capable of transmitting a first repeating sequence of data frames comprising a first data frame 300 (FIG. 3). The remaining data frames in the first repeating sequence have the same structure as the first data frame 300. The first data frame 300 comprises a first, second, third, fourth, fifth, six, seventh and eighth time slot 302, ...., 316 as is known in the art. Each time slot 302,....316 has a duration of 577 µs and comprises a portion containing a training sequence, for example, a midamble 318 and a first and a second data portion 320, 322 for conveying traffic or control data.

Similarly, the second base station 108 is capable of transmitting a second repeating sequence of data frames comprising a second data frame 400 (FIG. 4). The remaining data frames in the second sequence have the same structure as the second data frame. In this example, the structure of the first data frame 300 is substantially similar to the structure of the second data frame 400. The second data frame 400 comprises a first, second, third, fourth, fifth, sixth, seventh and eighth time slot 402,..., 416 as it known in the art. Each time slot 402,..., 416 has a duration of 577 µs, and comprises a portion containing a training sequence, for example, a midamble 418 and a first and a second data portion 420, 422 for conveying traffic or control data.

The training sequences 318, 418, as described above, are sequences of bits known to all components of a network, for example, base stations and mobile terminals, and are used for various calculations, for example, channel estimation, frame synchronisation, timing advance estimation and carrier phase recovery. The training sequences 318, 418 can be located at any point within the time slots 302,..., 316, 402,..., 416.

Operation of the above picocell system 100 will now be described below.

A call is established, according to any known method in the art, between the first base station 104 and the first mobile terminal 120. A first traffic channel (TCH) is allocated to one of the second, fourth, fifth, sixth, seventh or eighth time slot 304, 308, 310, 312, 314, 316 in the first data frame 300, for example, the second time slot 304. The time slot allocated can be a next available time slot. The first base station 104 is in communication with the first mobile terminal 120 and communicates by transmitting the first repeating sequence of data frames, including for example, the first data frame 300.

Similarly, the second base station 108 is in communication with a second mobile terminal 122 and communicates by transmitting the second repeating sequence of data frames, including for example, the second data frame 400. In this example, the fourth time slot is allocated for communication between the second mobile terminal 122 and the second base station 108.

Due to the existence of a common BCCH, as described above, transmitted in this example in the first time slots 302, 402, traditional power measurements are not available. Therefore, it is necessary to measure the power of transmissions from, for example, the first mobile terminal 120 at both the first and second base stations 104, 108 in order to determine which of the first or second coverage areas 106,110 has the least propagation path loss.

The measurement of the power, at the first base station 104, of transmissions from the first mobile terminal 120 can easily be achieved by measuring the transmission power of the second time slot 304.

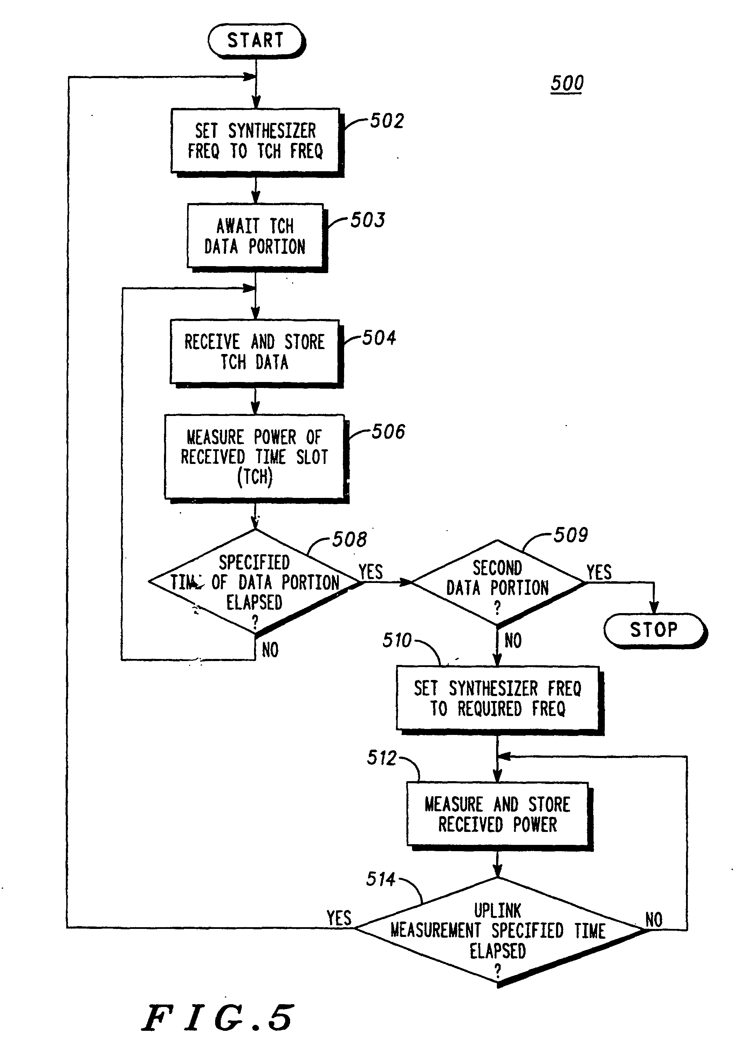

Referring to FIG. 5, the method of measuring (500) uplink power transmitted by the first mobile terminal 120 at the second base station 108 is as follows.

The first synthesiser 214 of the SSU 210 (FIG. 2) is tuned (step 502) to receive the fourth time slot 408 transmitted from the second mobile terminal 122. The second base station 108 awaits receipt (step 503) of the first or second data portion 420, 422. When the first data portion 420 of the fourth time slot 408 is received by the second base station 108, traffic data contained in the first data portion 420 is stored (step 504). The second base station 108 measures the power of the traffic data received (step 506). The second base station 108 then determines (step 508) whether the whole of the first data portion 420 has been received by monitoring the time elapsed from the receipt of the beginning of the fourth time slot 408. If the midamble 418 has not been detected, the second base station 108 continues to receive and store the traffic data (step 504) and measure the power of the traffic data (step 506).

When the second base station 108 has identified that the duration of the first data portion 420 has elapsed, i.e. the beginning of the midamble 418 (step 508) has been identified, the second base station 108 checks whether the second data portion 422 has been received (step 509). If the second data portion 422 has not been received, the second synthesiser 216 is set (step 510) to the frequency on which the first mobile terminal 120 is transmitting and the switch 218 is actuated so that the second synthesiser 216 is connected to the mixer 208.

The second base station 108 can then receive and measure the power of transmissions from the first mobile terminal 120 whilst the midamble 418 is being transmitted to the second base station 108 from the second mobile terminal 122 (step 512). The measured power is then stored.

The second base station 108 then proceeds to determine (step 514) whether sufficient time has elapsed in order to measure the power of transmissions from the first mobile terminal 120. If more time is required, the second base station 108 continues to measure the power of the first mobile terminal 120 until the transmission of the midamble 418 is approaching completion and transmission of the second data portion 422 containing traffic data is about to commence. If sufficient time has already elapsed or transmission of the second data portion is about to commence, the switch 218 is actuated so that the first synthesiser 214 is connected to the mixer 208 (step 502) once again and the second base station 108 commences receipt and storage of the second data portion 422, in a similar manner to that described above in relation to the first data portion 418. Once the second base station has determined that the transmission of the second data portion 422 has been completed (step 508), the process terminates in response to the second base station 108 acknowledging that the second data portion 422 has been received (step 509).

The above described process is repeated for the fourth time slot 408 in subsequent data frames forming part of the first sequence of data frames.

Although the above example has been described in the context of the second time slot 304 and the fourth time slot 408 being allocated to the first and second mobile terminals 120, 122, other time slots can be allocated to the first and second mobile terminals 120, 122. The above example is merely given for simplicity and clarity of description and it is not intended that the present invention be limited thereto.

It is thus possible to measure uplink power of the first mobile terminal 120 in the picocell system 100 having a single receiver chain and employing a common BCCH architecture, thereby obviating the above described disadvantages.

## Claims

1. A communications system (100) comprising a first terminal (120) arranged to transmit user data (420,422) and training data (418) in a time slot to a base station (104) at a first frequency, **characterised in that** the base station (104) is arranged to tune to the first frequency when receiving the user data (420,422) and tune to a second frequency to make a power measurement of a transmission from a second terminal (122) at the second frequency whilst the training data (418) is being transmitted from the first terminal (120).

2. A system as claimed in Claim 1, wherein the training data (418) is a midamble.

3. A system as claimed in Claim 1, wherein the base station (104) further comprises a synthesiser (210) capable of tuning a receiver to a transmission from the first terminal (120) and the transmission from the second terminal(122), the synthesiser (210) being arranged to tune to a frequency of the transmission of the second terminal (122) prior to making the power measurement.

4. A system as claimed in Claim 1, wherein the base station (104) is arranged to make a phase recovery calculation using a portion of the training data (418).

5. A system as claimed in Claim 1, wherein the base station (104) is arranged to make a channel estimation calculation using a portion of the training data (418).

6. A method of measuring power in a system comprising of a first terminal (120) arranged to transmit user data (420,422) and training data (418) in a time slot to a base station (104) at a first frequency, the method **characterised by** comprising the steps of:
tuning to the first frequency when receiving the user data (420,422); and
tuning to a second frequency to measure the power of a transmission from a second terminal (122) at the second frequency whilst the training data (418) is being transmitted from the first terminal.

7. A method as claimed in Claim 6, wherein the training data (418) is a midamble.

8. A method as claimed in Claim 6, further comprising making a phase recovery calculation using a portion of the training data (418).

9. A method as claimed in Claim 6, further comprising making a channel estimation calculation using a portion of the training data (418).

## Patentansprüche

1. Kommunikationssystem (100), umfassend ein erstes Endgerät (120), das eingerichtet ist zur Übertragung von Benutzerdaten (420, 422) und Trainingsdaten (418) an eine Basisstation (104) in einem Zeitkanal bei einer ersten Frequenz, **dadurch gekennzeichnet, dass** die Basisstation (104) eingerichtet ist, auf die erste Frequenz abzustimmen, wenn sie die Benutzerdaten (420, 422) empfängt, und auf eine zweite Frequenz abzustimmen, um eine Leistungsmessung einer Übertragung von einem zweiten Endgerät (122) bei der zweiten Frequenz durchzuführen, während die Trainingsdaten (418) von dem ersten Endgerät (120) übertragen werden.

2. System nach Anspruch 1, wobei die Trainingsdaten (418) eine Midamble sind.

3. System nach Anspruch 1, wobei die Basisstation (104) weiter einen Synthesizer (210) umfasst, der in der Lage ist, einen Empfänger auf eine Übertragung von dem ersten Endgerät (120) und die Übertragung von dem zweiten Endgerät (122) abzustimmen, wobei der Synthesizer (210) eingerichtet ist, vor Durchführung der Leistungsmessung auf eine Frequenz der Übertragung von dem zweiten Endgerät (122) abzustimmen.

4. System nach Anspruch 1, wobei die Basisstation (104) eingerichtet ist, unter Verwendung eines Bereichs der Trainingsdaten (418) eine Berechnung zur Phasenwiederherstellung anzustellen.

5. System nach Anspruch 1, wobei die Basisstation (104) eingerichtet ist, unter Verwendung eines Bereichs der Trainingsdaten (418) eine Berechnung zur Kanalabschätzung anzustellen.

6. Verfahren zur Leistungsmessung in einem System, umfassend ein erstes Endgerät (120), das eingerichtet ist zur Übertragung von Benutzerdaten (420, 422) und Trainingsdaten (418) an eine Basisstation (104) in einem Zeitkanal bei einer ersten Frequenz, **dadurch gekennzeichnet, dass** das Verfahren folgende Schritt umfasst:
Abstimmen auf die erste Frequenz, wenn die Benutzerdaten (420, 422) empfangen werden, und
Abstimmen auf eine zweite Frequenz, um die Leistung einer Übertragung von einem zweiten Endgerät (122) bei der zweiten Frequenz zu messen, während die Trainingsdaten (418) von dem ersten Endgerät übertragen werden.

7. Verfahren nach Anspruch 6, wobei die Trainingsdaten (418) eine Midamble sind.

8. Verfahren nach Anspruch 6, weiter umfassend die Durchführung einer Berechnung zur Phasenwiederherstellung unter Verwendung eines Bereichs der Trainingsdaten (418).

9. Verfahren nach Anspruch 6, weiter umfassend die Durchführung einer Berechnung zur Kanalabschätzung unter Verwendung eines Bereichs der Trainingsdaten (418).

## Revendications

1. Système de communication (100) qui comprend un premier terminal (120) qui est agencé pour émettre des données d'utilisateur (420, 422) et des données d'apprentissage (418) dans une fenêtre temporelle sur une station de base (104) à une première fréquence, **caractérisé en ce que** la station de base (104) est agencée pour s'accorder sur la première fréquence lors de la réception des données d'utilisateur (420, 422) et pour s'accorder sur une seconde fréquence afin de réaliser une mesure de puissance d'une transmission depuis un second terminal (122) à la seconde fréquence tandis que les données d'apprentissage (418) sont en train d'être émises depuis le premier terminal (120).

2. Système selon la revendication 1, dans lequel les données d'apprentissage (418) sont une zone de gestion intermédiaire.

3. Système selon la revendication 1, dans lequel la station de base (104) comprend en outre un synthétiseur (210) permettant d'accorder un récepteur sur une émission en provenance du premier terminal (120) et sur l'émission en provenance du second terminal (122), le synthétiseur (210) étant agencé pour s'accorder sur une fréquence de l'émission du second terminal (122) avant de réaliser la mesure de puissance.

4. Système selon la revendication 1, dans lequel la station de base (104) est agencée pour réaliser un calcul de restauration de phase en utilisant une partie des données d'apprentissage (418).

5. Système selon la revendication 1, dans lequel la station de base (104) est agencée pour réaliser un calcul d'estimation de canal en utilisant une partie des données d'apprentissage (418).

6. Procédé de mesure de puissance dans un système comprenant un premier terminal (120) qui est agencé pour transmettre des données d'utilisateur (420, 422) et des données d'apprentissage (418) dans une fenêtre temporelle sur une station de base (104) à une première fréquence, le procédé étant **caractérisé en ce qu'**il comprend les étapes de :
accord sur la première fréquence lors de la réception des données d'utilisateur (420, 422) ; et
accord sur une seconde fréquence pour mesurer la puissance d'une émission en provenance d'un second terminal (122) à la seconde fréquence tandis que les données d'apprentissage (418) sont en train d'être émises depuis le premier terminal.

7. Procédé selon la revendication 6, dans lequel les données d'apprentissage (418) sont une zone de gestion intermédiaire.

8. Procédé selon la revendication 6, comprenant en outre la réalisation d'un calcul de restauration de phase en utilisant une partie des données d'apprentissage (418).

9. Procédé selon la revendication 6, comprenant en outre la réalisation d'un calcul d'estimation de canal en utilisant une partie des données d'apprentissage (418).
